# EUROPÄISCHE PATENTSCHRIFT

(11) **EP 4 263 061 B1**
(45) Veröffentlichungstag und Bekanntmachung des Hinweises auf die Patenterteilung: **24.07.2024**
(21) Anmeldenummer: 22711443.6
(22) Anmeldetag: 16.03.2022
(51) Int. Cl.: B02C 18/24, B65G 53/46

(54) **ZELLENRADSCHLEUSE ZUM FÖRDERN UND ZERKLEINERN VON SCHÜTTGUT**
ROTARY FEEDER FOR CONVEYING AND COMMINUTING BULK MATERIAL
SAS À ROUE CELLULAIRE POUR LE TRANSPORT ET LE BROYAGE DE PRODUITS EN VRAC

(30) Priorität: 30.03.2021 AT 600992021
(43) Veröffentlichungstag der Anmeldung: 25.10.2023
(73) Patentinhaber: MSW GmbH, 2700 Wiener Neustadt (AT)
(72) Erfinder: KURRI, Ernst, 2700 Wiener Neustadt (AT)
(74) Vertreter: Müllner, Martin
(86) Internationale Anmeldenummer: PCT/AT2022/060076
(87) Internationale Veröffentlichungsnummer: WO 2022/204740

(56) Entgegenhaltungen:
- DE-A1- 102019 100 198
- JP-A- H08 135 454

## Beschreibung

### Technisches Gebiet

Die vorliegende Erfindung betrifft eine Zellenradschleuse zum Fördern und Zerkleinern von Schüttgut mit einem sich in einer Gehäusetrommel drehenden Zellenrad mit mehreren Zellenradstegen; wobei die Gehäusetrommel oben eine Zufuhröffnung und unten eine Abfuhröffnung aufweist; wobei die Außenkante jedes Zellenradsteges in Drehrichtung vorne als Schneidkante ausgebildet ist oder mit einer Schneidkante versehen ist; wobei diese Schneidkanten mit einer Gegenschneide der Zufuhröffnung zusammenwirken, und wobei das Zellenrad mit einem Kettenrad verbunden ist, sodass es durch eine Kette in Drehung versetzbar ist.

### Stand der Technik

Solch eine Zellenradschleuse findet z.B. bei Heizungen Anwendung, die Holzabfälle verbrennen. Solange diese Holzabfälle Pellets sind, arbeiten diese Zellenradschleusen relativ problemlos. Wenn aber z.B. nicht aufbereitete Tischlereiabfälle zugeführt werden, kommt es immer wieder vor, dass längere Holzstücke enthalten sind, die nicht in die Zellenradschleuse passen. Diese müssen nun durch die Schneidkante der Zellenradstege durchtrennt werden.

Mit Ausnahme des Antriebs mittels eines Kettenrads ist solch eine Zellenradschleuse in
patcit0001:DE 102019100198 A --.
beschrieben.

Es ist offensichtlich, dass zum Durchschneiden von Holzabfällen ein erheblicher Kraftaufwand notwendig ist. Um die notwendige hohe Kraft sicherzustellen, setzt man entweder einen entsprechend leistungsstarken Motor ein, was die Zellenradschleuse teuer macht, oder man verwendet ein starkes Untersetzungsgetriebe, was bewirkt, dass sich die Zellenradschleuse nur langsam dreht, also nur wenig Materialdurchsatz hat.

### Darstellung der Erfindung

Es ist Aufgabe der vorliegenden Erfindung, diesen Nachteil zu beseitigen.

Diese Aufgabe wird durch eine Zellenradschleuse der eingangs genannten Art erfindungsgemäß dadurch gelöst, dass das Zellenrad genau zwei einander gegenüberliegende Zellenradstege aufweist und dass das Kettenrad oval ist.

Unter "oval" soll hier eine Form verstanden werden, die von der Kreisform abweicht und eine lange Achse und eine dazu normal stehende kurze Achse aufweist. Das Kettenrad kann daher insbesondere elliptisch sein, aber auch von der exakten Ellipsenform abweichende Formen sind möglich.

Ovale Kettenräder sind vom Radsport her bekannt. Dort ist manchmal das Kettenrad, das mit den Pedalen verbunden ist, also das Antriebskettenrad, oval ausgeführt, damit der Totpunkt der Pedale (wenn diese oben und unten stehen) leichter überwunden werden kann und somit das aufgebrachte Drehmoment gleichmäßiger ist.

Gemäß der vorliegenden Erfindung ist jedoch das Abtriebskettenrad, also das Kettenrad, das mit dem Zellenrad verbunden ist, oval, damit einerseits in dem Augenblick, wo eventuell Material geschnitten werden muss (d.h. wenn die Schneidkante knapp vor der Gegenschneide steht), viel Kraft zur Verfügung steht, aber andererseits in der übrigen Zeit sich das Zellenrad dennoch relativ rasch dreht.

Vorzugsweise führt die Kette zum Antrieb des Kettenrads des Zellenrads zu einem weiteren Kettenrad, welches die gleiche ovale Form wie das Kettenrad des Zellenrads hat, aber um 90° dagegen verdreht ist. Dadurch ergibt sich der Effekt, dass das Antriebskettenrad den größten Wirkdurchmesser hat, wenn das Abtriebskettenrad den kleinsten Wirkdurchmesser hat und umgekehrt, sodass sich also das Übersetzungsverhältnis quadratisch mit dem Verhältnis größter Durchmesser zu kleinster Durchmesser ändert.

Damit die größte Kraft dann auftritt, wenn eventuell Material geschnitten werden muss, ist nach einem weiteren Merkmal der Erfindung vorgesehen, dass in der Position, in der die lange Achse des Kettenrads des Zellenrads normal zur Verbindungslinie der beiden Kettenräder steht, eine der beiden Schneidkanten im Bereich von der Gegenschneide bis maximal 20° vor der Gegenschneide steht.

Da ein ovales Kettenrad pro Umdrehung nur zwei Mal die maximale Kraft aufbringt, sind erfindungsgemäß auch nur zwei Zellenradstege vorgesehen. Aus diesem Grund können bei größeren Zufuhr- und Abfuhröffnungen diese zeitweise miteinander kommunizieren, wodurch die Zellenradschleuse nicht mehr dosiert.

Um das zu verhindern, kann jeder Zellenradsteg in Drehrichtung hinten ein Abdeckelement aufweisen, welches in entsprechender Drehstellung zusammen mit dem Zellenradsteg die gesamte Zufuhröffnung bzw. die gesamte Abfuhröffnung abdeckt.

### Kurze Beschreibung der Zeichnungen

An Hand der beiliegenden Figuren wird die vorliegende Erfindung näher erläutert. Es zeigt: Fig. 1 eine erfindungsgemäße Zellenradschleuse über einer Öffnung für eine Stokerschnecke, schräg oben von der Antriebsseite gesehen; Fig. 2 dieselbe, aber zusätzlich mit dem Antriebskettenrad für die Stokerschnecke, und mit entfernter seitlicher Türe; und Fig. 3 dieselbe von der gegenüberliegenden Seite betrachtet, mit abgenommener Rückwand.

### Bester Weg zur Ausführung der Erfindung

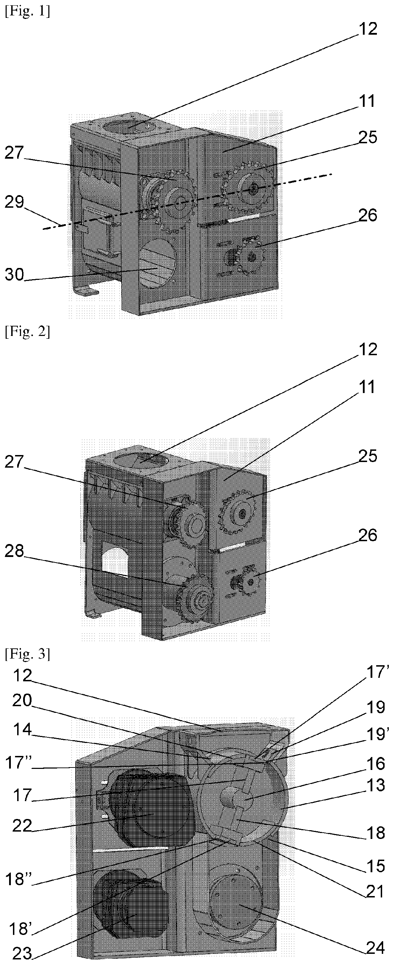

In einem Gehäuse 11 befindet sich oben eine Öffnung 12. Unter dieser Öffnung 12 befindet sich eine zylindrische Gehäusetrommel 13 (siehe Fig. 3), die oben eine Zufuhröffnung 14 und unten eine Abfuhröffnung 15 aufweist. In dieser Gehäusetrommel 13 ist ein Zellenrad 16 mit zwei Zellenradstegen 17, 18 drehbar gelagert. So wie in Fig. 3 gesehen, dreht sich das Zellenrad 16 im Uhrzeigersinn. Außen und in Drehrichtung vorne sind Plättchen 17', 18' eingesetzt, die in Drehrichtung vorne eine Schneidkante 17", 18" aufweisen. Diese Schneidkanten 17", 18" wirken mit einer Gegenschneide 19' eines Einsatzes 19 zusammen und bewirken, dass längere Holzteile, die sich in der Zellenradschleuse verklemmen würden, durchgeschnitten werden. In Drehrichtung hinten sind die Zellenradstege 17, 18 mit Abdeckelementen 20, 21 versehen, die die Form von Zylindersegmenten haben und zusammen mit den Zellenradstegen 17, 18 in der dargestellten Drehstellung die Zufuhröffnung 14 und die Abfuhröffnung 15 verschließen, sodass in keiner Drehstellung die Zufuhröffnung 14 mit der Abfuhröffnung 15 in Verbindung steht.

Im Gehäuse 11 unten befindet sich hinter einer Abdeckung 24 eine Stokerschnecke, die bei Anwendung zusammen mit einem Ofen das Material dann in den eigentlichen Ofen fördert. Links in Fig. 3 sind noch Getriebemotoren 22, 23 zu sehen. Der Getriebemotor 22 dient zum Antrieb der erfindungsgemäßen Zellenradschleuse, der Getriebemotor 23 dient zum Antrieb der Stokerschnecke.

Der wesentliche Punkt der vorliegenden Erfindung ist in den Fig. 1 und 2 ersichtlich. Der Getriebemotor 22 (siehe Fig. 3) treibt ein Kettenrad 25 (siehe Fig. 1 und 2) an, und der Getriebemotor 23 (siehe Fig. 3) treibt ein Kettenrad 26 (siehe Fig. 1 und 2) an. Das Kettenrad 25 treibt über eine Kette (nicht dargestellt) ein Kettenrad 27, das direkt mit dem Zellenrad 16 (siehe Fig. 3) verbunden ist an. Erfindungsgemäß sind beide Kettenräder 25 (siehe Fig. 1 und 2) und 27 identisch und beide oval, wobei sie aber gegeneinander um 90° verdreht sind. In der dargestellten Drehstellung steht die lange Achse des Kettenrads 27 normal zur Verbindungslinie 29 der beiden Kettenräder 25, 27, wogegen die lange Achse des Kettenrads 25 mit dieser Verbindungslinie 29 zusammenfällt. In dieser Stellung wird die Kraft übersetzt und die Geschwindigkeit untersetzt. In dieser Stellung sollte sich (wie in Fig. 3 dargestellt) eine Schneidkante 17" bei der Gegenschneide 19' befinden, oder einige wenige Grad (maximal 20°) davor, damit beim Schneidvorgang die maximale Kraft zur Verfügung steht. Nach dem Schneidvorgang nimmt dann die Kraftübersetzung ab und die Geschwindigkeitsübersetzung nimmt zu, sodass sich das Zellenrad 16 schneller dreht, wenn gerade nicht geschnitten wird.

In Fig. 1 ist unterhalb des Kettenrads 27 eine Öffnung 30 zu sehen, in die eine Stokerschnecke eingebaut werden kann.

In Fig. 2 ist die Stokerschnecke auch nicht dargestellt, sehr wohl aber ein Kettenrad 28, das zum Antrieb dieser Stokerschnecke dient. Die Kettenräder 26, 28 für die Stokerschnecke sind wie üblich kreisrund ausgeführt. Diese Stokerschnecke fördert das Material in das Innere eines Ofens.

## Patentansprüche

1. Zellenradschleuse zum Fördern und Zerkleinern von Schüttgut mit einem sich in einer Gehäusetrommel (13) drehenden Zellenrad (16) mit mehreren Zellenradstegen (17, 18); wobei die Gehäusetrommel (13) oben eine Zufuhröffnung (14) und unten eine Abfuhröffnung (15) aufweist; wobei die Außenkante jedes Zellenradsteges (17, 18) in Drehrichtung vorne als Schneidkante ausgebildet ist oder mit einer Schneidkante (17", 18") versehen ist; wobei diese Schneidkanten (17", 18") mit einer Gegenschneide (19') der Zufuhröffnung (14) zusammenwirken, und wobei das Zellenrad (16) mit einem Kettenrad (27) verbunden ist, sodass es durch eine Kette in Drehung versetzbar ist, **dadurch gekennzeichnet, dass** das Zellenrad (16) genau zwei einander gegenüberliegende Zellenradstege (17, 18) aufweist **und dass** das Kettenrad (27) oval ist.

2. [geändert] Zellenradschleuse nach Anspruch 1, **dadurch gekennzeichnet, dass** eine Kette zum Antrieb des Kettenrads (27) des Zellenrads (16) vorgesehen ist, die zu einem weiteren Kettenrad (25) führt, welches die gleiche ovale Form wie das Kettenrad (27) des Zellenrads (16) hat, aber um 90° dagegen verdreht ist.

3. Zellenradschleuse nach Anspruch 2, **dadurch gekennzeichnet, dass** in der Position, in der die lange Achse des Kettenrads (27) des Zellenrads (16) normal zur Verbindungslinie (29) der beiden Kettenräder (27, 25) steht, eine der beiden Schneidkanten (17", 18") im Bereich von der Gegenschneide (19') bis maximal 20° vor der Gegenschneide (19') steht.

4. Zellenradschleuse nach einem der Ansprüche 1 bis 3, **dadurch gekennzeichnet, dass** jeder Zellenradsteg (17, 18) in Drehrichtung hinten ein Abdeckelement (20, 21) aufweist, welches in entsprechender Drehstellung zusammen mit dem Zellenradsteg (17, 18) die gesamte Zufuhröffnung (14) bzw. die gesamte Abfuhröffnung (15) abdeckt..

## Claims

1. A rotary feeder for conveying and crushing a bulk material with a cellular wheel (16) rotating in a housing drum (13) having a plurality of cellular wheel webs (17, 18); wherein the housing drum (13) includes a feed opening (14) at the top and a discharge opening (15) at the bottom; wherein the outer edge of each cellular wheel web (17, 18) is formed at the front in the direction of rotation as a cutting edge or is provided with a cutting edge (17", 18"); wherein these cutting edges (17", 18") interact with a counter-cutting edge (19') of the feed opening (14), and wherein the cellular wheel (16) is connected to a chain wheel (27) such that it can be rotated by a chain, **characterised in that** the cellular wheel (16) includes exactly two cellular wheel webs (17, 18) opposing each other and **in that** the chain wheel (27) is oval.

2. The rotary feeder according to claim 1, **characterised in that** a chain is provided for driving the chain wheel (27) of the cellular wheel (16) leading to another chain wheel (25) which has the same oval shape as the chain wheel (27) of the cellular wheel (16), but is rotated by 90° against the same.

3. The rotary feeder according to claim 2, **characterised in that** in the position, in which the long axis of the chain wheel (27) of the cellular wheel (16) is normal to the connecting line (29) of the two chain wheels (27, 25), the one of the two cutting edges (17", 18") being located in the region of the counter cutting edge (19') is positioned to a maximum of 20° in front of the counter cutting edge (19').

4. The rotary feeder according to any of claims 1 to 3, **characterised in that** each cellular wheel web (17, 18) includes a covering element (20, 21) at the back in the direction of rotation, which in the corresponding rotational position together with the cellular wheel web (17, 18) covers the entire feed opening (14) or the entire discharge opening (15).

## Revendications

1. Sas à roue alvéolaire destiné à transporter et broyer des matières en vrac, comportant une roue alvéolaire (16) qui est montée rotative dans un tambour (13) et qui est pourvue de plusieurs ailettes de roue alvéolaire (17, 18) ; le tambour (13) présentant dans sa partie supérieure une entrée (14) et dans sa partie inférieure une sortie (15); le bord extérieur de chaque ailette de roue alvéolaire (17, 18) étant réalisé à l'avant, selon le sens de rotation, sous forme d'un tranchant ou pourvu d'un tranchant (17", 18") ; les tranchants (17", 18") coopérant avec un tranchant complémentaire (19') de l'entrée (14), et la roue alvéolaire (16) étant reliée à une couronne à chaîne (27), faisant en sorte qu'elle puisse être entraînée en rotation au moyen d'une chaîne, **caractérisé en ce que** la roue alvéolaire (16) présente exactement deux ailettes de roue alvéolaire (17, 18) opposés l'un à l'autre **et que** la couronne à chaîne (27) est de forme ovale.

2. Sas à roue alvéolaire selon la revendication 1, **caractérisé en ce qu'**il est pourvu d'une chaîne qui est destinée à entraîner la couronne à chaîne (27) de la roue alvéolaire (16) et qui mène à une autre couronne à chaîne (25) ayant la même forme ovale que la couronne à chaîne (27) de la roue alvéolaire (16) tout en étant décalée en rotation de 90° par rapport à cette dernière.

3. Sas à roue alvéolaire selon la revendication 2, **caractérisé en ce que** dans la position dans laquelle l'axe long de la couronne à chaîne (27) de la roue alvéolaire (16) se trouve en orientation normale par rapport à la ligne (29) reliant les deux couronnes à chaîne (27, 25), l'un des deux tranchants (17", 18") se trouvant dans la zone du tranchant complémentaire (19'), est positionné à 20° maximum devant le tranchant complémentaire (19').

4. Sas à roue alvéolaire selon l'une des revendications 1 à 3, **caractérisé en ce que** chaque ailette de roue alvéolaire (17, 18) présente à l'arrière, selon le sens de rotation, un élément de couverture (20, 21) qui viendra couvrir, ensemble avec l'ailette de roue alvéolaire (17, 18), l'intégralité de l'entrée (14) ou l'intégralité de la sortie (15) lorsqu'il adopte une position rotative correspondante.
